# EUROPÄISCHE PATENTSCHRIFT

(11) **EP 0 529 266 B1**
(45) Veröffentlichungstag und Bekanntmachung des Hinweises auf die Patenterteilung: **14.09.1994**
(21) Anmeldenummer: 92111852.7
(22) Anmeldetag: 11.07.1992
(51) Int. Cl.: A47J 43/08

(54) **Elektrisch betriebener Handrührer**
Electric hand mixer
Batteur à main électrique

(30) Priorität: 13.08.1991 DE 4126721
(43) Veröffentlichungstag der Anmeldung: 03.03.1993
(73) Patentinhaber: Braun Aktiengesellschaft, Frankfurt am Main (DE)
(72) Erfinder: Penaranda, Mariano, E-08024 Barcelona (ES); Millan, José, E-08028 Barcelona (ES); Falcó, Desiderio, E-08028 Barcelona (ES); Masip i Balduque, Josep M., E-08023 Barcelona (ES); Rodriguez, Emilio, E-08023 Cornella (Barcelona) (ES)

(56) Entgegenhaltungen:
- CH-A- 391 210
- DE-A- 1 429 176
- DE-A- 2 802 155
- DE-B- 1 261 987
- DE-U- 9 006 927
- US-A- 3 533 600
- US-A- 3 595 093
- US-A- 3 604 114

## Beschreibung

Die Erfindung betrifft einen elektrisch betriebenen Handrührer zum Bearbeiten von Nahrungsmitteln, mit einer manuell zu betätigenden elektrischen Schalteinrichtung zur Inbetriebnahme des Elektromotors, die sowohl eine oder mehrere Schaltstufen für den Dauerbetrieb des Elektromotors als auch mindestens eine Schaltstufe aufweist, bei deren Auswahl der Elektromotor nur so lange in Betrieb (Kurzzeitbetrieb) bleibt, als diese manuell betätigt bleibt und mit mehreren zur Halterung und zum Antrieb verschiedener einsetzbarer Arbeitswerkzeuge dienenden Kupplungseinrichtungen, wobei es sich bei den Arbeitswerkzeugen, beispielsweise um Knethaken, Schneebesen oder einen ein rotierendes Messer aufweisenden Pürierstab, handeln kann, wobei der Handrührer Mittel aufweist, die dafür sorgen, daß nach dem Einsetzen eines Pürierstabes oder anderer messerähnlicher Arbeitswerkzeuge in die hierfür vorgesehene Kupplungseinrichtung trotz der Aktivierung der Schaltstufen für den Dauerbetrieb eine Verbindung des Elektromotors mit seiner Spannungsversorgung verhindert wird, während bei manueller Betätigung der Schaltstufe für den Kurzzeitbetrieb der Elektromotor nach wie vor mit seiner Spannungsversorgung verbunden ist, wobei die Mittel unter anderem aus einem bei nicht in die für den Pürierstab oder anderer messerähnlich wirkender Arbeitswerkzeuge vorgesehene Kupplungseinrichtung eingesetztem Arbeitswerkzeug geschlossenen elektrischen Schalter besteht, der im Stromkreis für den Dauerbetrieb des Elektromotors liegt und der beim Einsetzen des Pürierstabes oder anderer messerähnlich wirkender Arbeitswerkzeuge in die hierfür vorgesehene Kupplungseinrichtung geöffnet wird, wobei ein Öffnen des Schalters beim Einsetzen des Pürierstabes oder anderer messerähnlich wirkender Arbeitswerkzeuge vor dessen mechanischer Verbindung mit der zugehörigen Kupplungseinrichtung erfolgt und wobei diese Kupplungseinrichtung über eine am Motorgehäuse ausgebildete Öffnung von außen zugänglich ist, die von einer Klappe verschließbar ist.

Ein derartig elektrisch betriebener Handrührer ist beispielsweise aus der DE-2 802 155 Al bekannt. Bei diesem Handrührer ist es, sobald ein mit einem rotierenden Messer versehenes Arbeitswerkzeug mit der Antriebseinrichtung verbunden ist, nicht mehr möglich, den Handrührer durch Betätigen des Schalters in die Schaltstufe für den Dauerbetrieb einzuschalten, sondern es kann nur noch der Handrührer über die Schaltstufe für den Kurzzeitbetrieb eingeschaltet werden, d.h., solange der Schalter für den Kurzeitbetrieb von Hand in seiner Kurzzeitstellung gehalten wird, solange bleibt der Handrührer eingeschaltet. Sobald aber der Schalter für den Kurzzeltbetrieb von einer Bedienungsperson wieder losgelassen wird, kehrt dieser selbsttätig in seine Ausschaltstellung bzw. Null-Stellung zurück.

Auf diese Weise können unangenehme Verletzungen an einer Bedienungsperson vermieden werden, denn ein sofortiges Lösen der Hand vom Kurzzeitbetriebsschalter setzt den Antrieb des Handrührgerätes schlagartig außer Betrieb. Zwar können während der Benutzung des Handrührers mit einem messerähnlichen Arbeitswerkzeug die Schaltstufen für den Dauerbetrieb eingeschaltet werden, der Antriebsmotor wird aber nicht eingeschaltet, sondern dies ist dann ausschließlich nur über den Kurzzeitschalter möglich.

Da ein messerähnliches Arbeitswerkzeug eine andere Drehzahl als beispielsweise ein Knethaken oder Rührbesen erfordert, ist es erforderlich, daß diese Arbeitswerkzeuge an einer anderen Kupplungseinrichtung als der für die Kupplungseinrichtung des Knethakens oder Rührbesens am Handrührer angekuppelt werden. Durch die örtlich voneinander getrennten Kupplungseinrichtung des messerähnlichen Arbeitswerkzeuges gegenüber dem Knethaken bzw. dem Rührbesen am Handrührer ist somit auch die für das messerähnliche Arbeitswerkzeug vorgesehene Kupplungseinrichtung über eine am Motorgehäuse ausgebildete zusätzliche Öffnung von außen zugänglich.

Bei dem Handrührer nach der DE-2 802 155 Al kann es vorkommen, daß, wenn einerseits die Klappe versehentlich offengelassen wird und wenn andererseits eine Bedienungsperson nicht mit messerähnlichen Arbeitswerkzeugen, sondern beispielsweise mit einem Rührbesen arbeiten will, der Stufenschalter für den Dauerbetrieb nicht eingeschaltet werden kann. Dies kann dazu führen, daß eine Bedienungsperson zu der Annahme gelangt, daß der Stufenschalter defekt sei.

Aufgabe der Erfindung ist es daher, einen Handrührer der eingangs beschriebenen Art dahingehend zu verbessern, daß entsprechend der Wahl der Arbeitswerkzeuge sowohl die Dauerbetriebs- wie die Kurzzeitbetriebsstufe stets selbsttätig eingestellt wird.

Diese Aufgabe wird erfindungsgemäß dadurch gelöst, daß die Klappe durch die Kraft einer Feder selbsttätig in ihre Schließstellung bringbar ist, daß von der Klappe nur in ihrer Offenstellung der elektrische Schalter, der im Stromkreis für den Dauerbetrieb des Elektromotors liegt, geöffnet wird und daß nach Einführen eines Pürierstabes oder anderer messerähnlich wirkender Arbeitswerkzeuge in die hierfür vorgesehene und von der Klappe freigegebene Kupplungseinrichtung ein am Arbeitswerkzeug ausgebildeter Anschlag die Klappe entgegen der Kraft der Feder in ihrer Offenstellung hält.

Durch diese erfindungsgemäße Anordnung wird also erreicht, daß beim Herausziehen des messerähnlichen Arbeitswerkzeuges die Öffnung der Kupplungseinrichtung automatisch von der Klappe verschlossen wird und daß dabei der elektrische Schalter wieder die Schaltstufen für den Dauerbetrieb selbsttätig freigibt, ohne daß dabei zusätzliche Handgriffe von einer Bedienungsperson erforderlich sind. Lediglich beim Einsetzen eines Pürierstabes oder anderer messerähnlich wirkender Arbeitswerkzeuge muß eine Bedienungsperson die Klappe von Hand öffnen, damit das entsprechende Arbeitswerkzeug in die hierfür vorgesehene Kupplungseinrichtung von außen eingekuppelt werden kann, durch die das Arbeitswerkzeug ortsfest aber drehbar gehalten wird. Durch die dabei vom Arbeitswerkzeug entgegen der Federkraft offengehaltene Klappe wird auch der elektrische Schalter in seiner Offenstellung gehalten, wodurch die Schaltstufen des Dauerbetriebs ohne Funktion sind.

Im Sinne der Erfindung ist es selbstverständlich auch denkbar, daß die für die Knethaken bzw. Schneebesen vorgesehenen Kupplungseinrichtungen mit selbsttätig verschließbaren Klappen versehen sind und mit Schaltern derart zusammenwirken, daß, wenn diese Klappen verschlossen sind, automatisch nur der Kurzzeitbetrieb des Handrührers wählbar ist und wenn zumindest eine dieser Klappen geöffnet wird, der Handrührer auf die Schaltstufe Dauerbetrieb umschaltet. Dabei kann dann die Klappe am messerähnlichen Arbeitswerkzeug entfallen.

Um die Handhabung des Handrührers zu erleichtern, ist es möglich, daß die Klappe von dem Gehäuse des Arbeitswerkzeuges verschoben wird. Hierbei kann beispielsweise an der Klappe eine Rampe vorgesehen sein, die beim Gegendrücken, also bei axialer Verschiebung des Pürierstabes gegen die Klappe sich mit dieser derart verschiebt, daß die Kupplungseinrichtung zur Aufnahme des Pürierstabes freigegeben und dabei der Schalter gleichzeitig betätigt wird. Es ist aber auch möglich, daß die Klappe selbst direkt von Hand geöffnen wird, bis sie den elektrischen Schalter öffnet.

Um eine besonders einfache und leichtgängige Führung bei selbsttätigem Verschließen der Klappe zu erreichen ist es vorteilhaft, daß die Klappe von einem Schieber gebildet wird, der in einer im Gehäuse ausgebildeten Kulissenführung gegen die Kraft einer Feder quer zur Längsrichtung des messerähnlichen Arbeitswerkzeuges verschiebbar ist.

Selbstverständlich Ist es auch durchaus denkbar, daß anstelle des mechanisch betätigbaren elektrischen Schalters ein durch magnetische Kräfte öffnender elektrischer Schalter verwendet wird, wobei die Kräfte von einem an dem entsprechenden Arbeitswerkzeug angebrachten Permanentmagneten ausgehen.

Besonders einfach läßt sich diese Sicherheitseinrichtung für einen elektrisch betriebenen Handrührer dann anwenden, wenn das Arbeitswerkzeug ein Pürierstab ist, der aus einer in einem stabförmig ausgebildeten Gehäuse drehbar gelagerten Abtriebswelle besteht, die an ihrem einen Ende einen Eingriff zum drehfesten Kuppeln mit der Kupplungseinrichtung und die an ihrem anderen Ende sich radial erstreckende Messerklingen aufweist, wobei die Messerklingen von einer am Gehäuse ausgebildeten, glockenförmig sich erweiternden und nach unten hin offenen Abschirmung radial nach außen geschützt sind und wobei der Anschlag für den elektrischen Schalter von einer den Eingriff der Abtriebswelle umgebenden, rohrförmigen Hülse gebildet wird.

Ein Ausführungsbeispiel der Erfindung ist in der Zeichnungen dargestellt und wird im folgenden näher beschrieben. Es zeigen:
- Fig. 1: Seitenansicht auf einen Handrührer mit mindestens einem in die Kupplungseinrichtung eingesetzten Knethaken,
- Fig. 2: Draufsicht auf den Handrührer in Richtung X nach Fig. 1, im Bereich des elektrischen Schalters,
- Fig. 3: Teilausschnitt im Bereich des einen Pürierstab aufnehmenden Gehäuseabschnittes des Handrührers bei geschlossener Klappe,
- Fig. 4: Darstellung wie in Fig. 3, jedoch ist hier kurz vor Einsetzen des Pürierstabes die Klappe bereits geöffnet,
- Fig. 5: Teillängsschnitt wie In Fig. 4, wobei allerdings bereits der Pürierstab in die Öffnung des Gehäuseabschnitts eingesetzt ist,
- Fig. 6: Seitenansicht auf den Handrührer mit eingesetztem Pürierstab und
- Fig. 7: Prinzipdarstellung der Arbeitsweise der Schalteinrichtung nach der Erfindung.

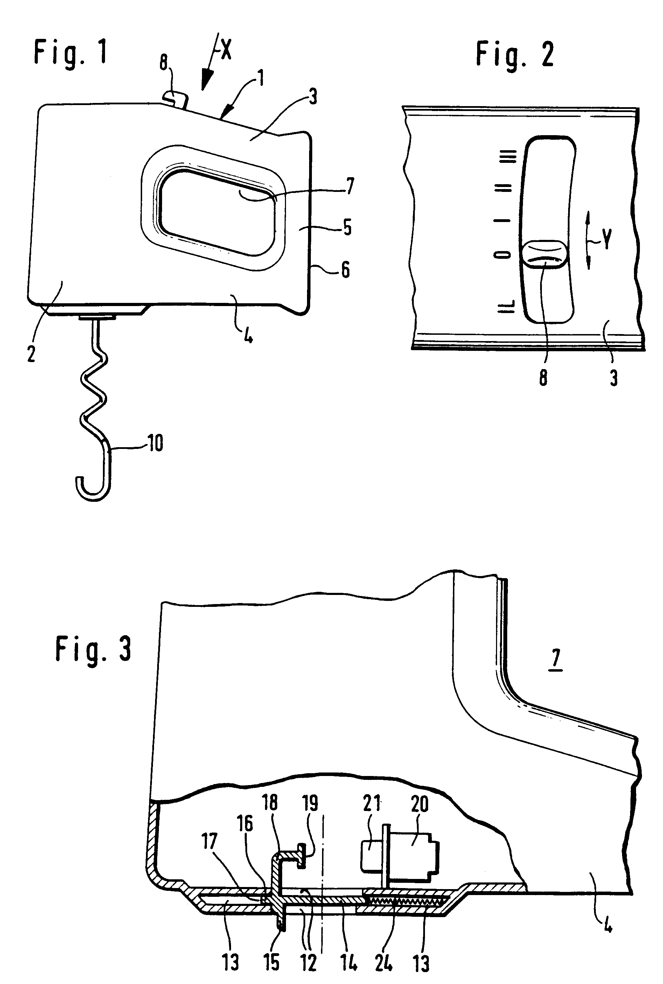

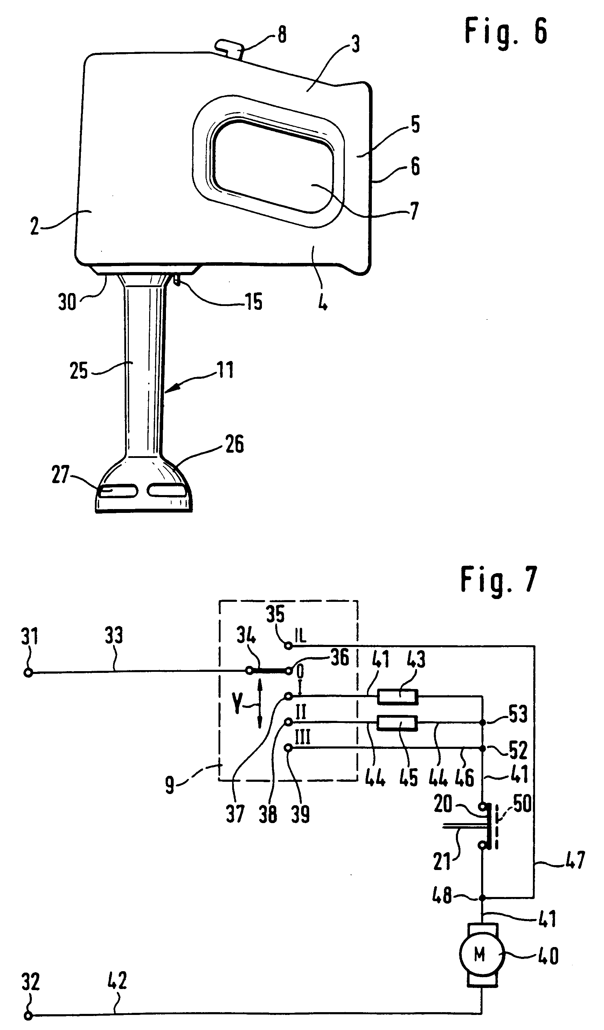

In Fig. 1 ist ein Handrührer 1 dargestellt, der im wesentlichen aus einem mit einem (nicht dargestellten) Motor versehenen Motorgehäuse 2 und einem quer zum Motorgehäuse 2 verlaufenden oberen und unteren Arm 3, 4 besteht, die an ihren freien Enden über einen senkrecht verlaufenden Steg 5 verbunden sind, an dem zum Abstellen des Handrührers 1 eine Abstellfläche 6 ausgebildet ist. Der vom Motorgehäuse 2, den Armen 3, 4 und der Abstellfläche 6 gebildete Freiraum 7 dient zur Aufnahme einer Hand, wenn diese zum Hantieren des Handrührers den oberen Arm 3 teilweise umgreift. An der Oberseite des oberen Arms 3 ragt das Betätigungsglied 8 eines im oberen Arm 3 ausgebildeten 5-Stufenschalters hervor, der in Fig. 7 mit der Positionsnummer 9 angezeigt wird.

Wie aus Fig. 2 ersichtlich ist, läßt sich das Betätigungsglied 8 quer zur Längsrichtung des oberen Arms 3, also in Richtung Y (siehe auch Fig. 7) in seine einzelnen Schaltstufen verschieben. In Fig. 2 und 7 nimmt dabei das Betätigungsglied 8 gerade seine O-Stellung ein, das heißt, der Handrührer ist außer Betrieb. An der Oberseite des oberen Arms 3 sind die fünf Schaltsstufen Positionszeichen angezeigt, wobei das Positionszeichen IL die Schaltstufe für den Kurzzeitbetrieb, das Positionszeichen O die Ausstellung des Handrührers und die Positionszeichen I bis III die verschiedenen Geschwindigkeitsstufen des Handrührers darstellen (siehe auch Fig. 7).

Nach Fig. 1 ist der Handrührer 1 mit einem Knethaken 10, während in Fig. 6 der Handrührer 1 mit einem Pürierstab 11 versehen ist. Zur Aufnahme des Pürierstabs 11 bzw. der Knethaken 10 sind verschiedene Kupplungseinrichtungen (nicht dargestellt) im Motorgehäuse 2 ausgebildet, deren Antriebswellen (nicht dargestellt) über eine Getriebeanordnung (nicht dargestellt) mit dem Elektromotor (nicht dargestellt) verbunden sind, das heißt, die Kupplungseinrichtungen für die Knethaken 10/Schneebesen (nicht dargestellt) bzw. für den Pürierstab 11 weisen im Betrieb des Handrührers 1 bei gleicher Motordrehzahl unterschiedliche Drehzahlen auf, so daß die Knethaken mit geringerer Drehzahl, die Schneebesen mit höherer und das Arbeitswerkzeug (nicht dargestellt) des Pürierstabes 11 mit höchster Geschwindigkeit rotiert. So können beispielsweise die Kupplungseinrichtungen zur Aufnahme eines Pürierstabes oder eines Schneebesens oder eines Knethakens so im Gehäuse eines Handrührers angeordnet sein, daß sie konzentrisch zueinander verlaufen und jeweils über eine gemeinsame Öffnung von außen zugänglich sind, so wie dies in der DE-33 06 989 Al beschrieben und dargestellt ist. Bei der Verwendung von drei verschiedenen Arbeitswerkzeugen (Schneebesen, Knethaken und Pürierstab) ist es oft schwierig diese an drei mit verschiedenen Drehzahlen laufenden Kupplungseinrichtungen über eine gemeinsame Öffnung anzuschließen, da auch diese dann koaxial zueinander verlaufen müßten. Daher ist es sinnvoll, getrennt von den beiden koaxial zueinander verlaufenden Kupplungseinrichtungen im Motorgehäuse eine weitere Kupplungseinrichtung einzurichten, mit der dann über eine weitere Öffnung der Pürierstab kuppelbar ist. Wird hingegen nur eine doppelte Kupplungseinrichtung für einen Knethaken/Schneebesen und einen Pürierstab gewählt, so können diese, beispielsweise wie in der oben erwähnten Offenlegungsschrift (DE-33 06 989 Al) oder wie bei dem eingangs erwähnten Krups-Handmixer angegeben, angeordnet sein.

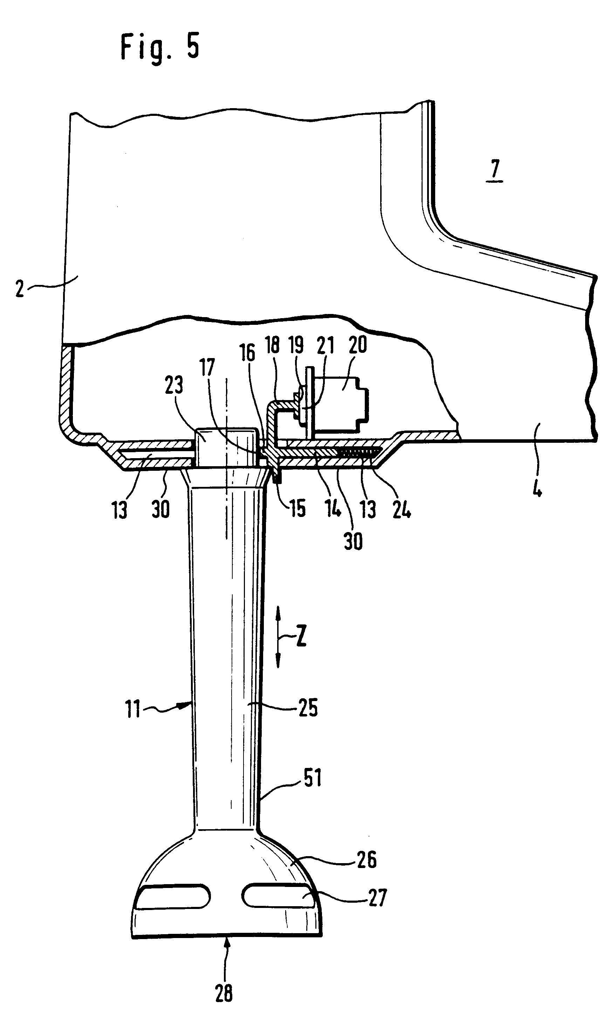

In den Fign. 3 bis 5 sind die einzelnen Montageschritte zum Montieren des Pürierstabes 11 in der hierfür vorgesehenen Öffnung 12 dargestellt. In Fig. 3 ist die Öffnung 12 durch eine in einer Kulissenführung 13 senkrecht zur Verschieberichtung Z (Fig. 5) verschiebaren Klappe 14 verschlossen. Dabei ist die Kulissenführung 13 links und rechts von der Öffnung 12 im Motorgehäuse 2 ausgebildet. Die Klappe 14 weist einen am Motorgehäuse 2 hervorstehenden Betätigungsstift 15 auf, der in Fig. 3 in seiner die Öffnung 12 verschließenden Stellung am linken Rand der Öffnung 12 anschlägt. Um ein dichtes Verschließen der Öffnung 12 zu gewährleisten, ragt in die linke Kulissenführung 13 ein Vorsprung 16 hinein, dessen Umfangsfläche 17 parallel zur Wandung der Öffnung 12 verläuft.

In den Fign. 3 bis 5 ist, dem Vorsprung 16 gegenüberliegend, im Innern des Motorgehäuses 2 am Vorsprung 16 ein Winkelstück 18 angeformt, dessen freies Ende eine Stirnfläche 19 aufweist, die beim Verschieben der Klappe 14 nach rechts an einem am Schalter 20 ausgebildeten, in Form eines als Betätigungsknopf ausgeführten Betätigungselementes 21 anschlägt und die bei weiterer Verschiebung der Klappe 14 diesen so weit zum Schalter 20 hin verschiebt, bis die im Schalter 20 ausgebildeten Kontakte voneinander getrennt werden (siehe die in Fig. 7 dargestellte gestrichelte Linie).

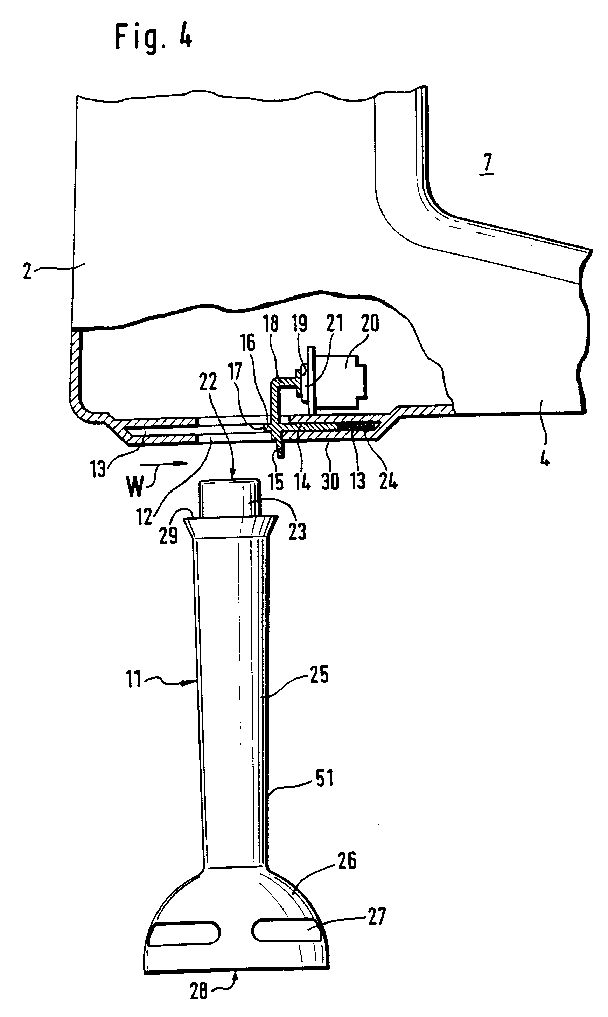

In den Fign. 4 bis 6 besteht der Pürierstab 11 aus einem aus Kunststoff hergestellten Gehäuse 25, das an seinem einen Ende 22 einen Rohrabschnitt 23 aufweist, aus dessen Inneren nach oben eine in der Zeichnung nicht dargestellte Abtriebswelle herausragt, die mit der ebenfalls nicht dargestellten Kupplungseinrichtung des Getriebes (ebenfalls nicht dargestellt) verbunden ist. Sobald nach Verschieben der Klappe 14 in Richtung W die Öffnung 12 freigegeben ist, kann der Pürierstab 11 mit seinem Rohrabschnitt 23 in die Öffnung 12 eingesetzt werden, so daß sich die in Fig. 5 angezeigte Stellung ergibt. Dabei schlägt der Vorsprung 16 an der Mantelfläche des Rohrabschnitts 23 an, so daß die Klappe 14 in ihrer Offenstellung gehalten wird. Damit nach Herausnehmen des Pürierstabs 11 aus der Öffnung 12 diese wieder verschlossen wird, ist in der Kulissenführung 13 eine Feder 24 ausgebildet, die bei geöffneter Öffnung 12 von der Klappe 14 derart vorgespannt wird, daß sie nach Entfernen des Pürierstabs 11 wieder in die in Fig. 3 dargestellte Schließstellung selbsttätig zurück schnappt.

In den Fign. 4 bis 6 besteht der Pürierstab 11 weiterhin aus einem rohrförmigen Schaft 51, an dessen freien Ende sich eine nach unten offene Glocke 26 anschließt, die mit umfangseitig verlaufenden Schlitzen 27 versehen ist. In dem Schaft 51 verläuft die drehbar gelagerte Abtriebswelle (nicht dargestellt), die in der Glocke 26 mit einem messerähnlichen Arbeitswerkzeug (nicht dargestellt) endet. Der Schaft 51 dient zum einen als Lagerung für die Abtriebswelle und zum anderen wird durch sie ein möglichst tiefes Eindringen in einen Behälter, in dem Nahrungsmittel mittels des messerähnlichen Arbeitswerkzeuges zerkleinert werden, gewährleistet.

Die Glocke 26 schirmt nach den Fign. 4 bis 6 das messerähnliche Arbeitswerkzeug nach außen hin ab und vermeidet somit bei unsachgemäßer Handhabung Verletzungen, wenn die Hand seitlich von außen gegen die Glocke geführt wird. Allerdings besteht bei einem derartigen Mixer oder Pürierstab 11 immer noch die Möglichkeit, daß die Finger einer Bedienungsperson von unten her in die Öffnung 28 der Glocke 26 unbeabsichtigt eingreifen können, so daß die Finger in Kontakt mit dem in der Glocke ausgebildeten messerähnlichen Arbeitswerkzeug gelangen und dabei verletzt werden können. In den Fign. 4 bis 6 ist das in der Glocke 26 rotierende messerähnliche Arbeitswerkzeug nicht erkennbar, da dies vom der Glocke 26 verdeckt wird. An der Glocke 26 sind gemäß den Fign. 4 bis 6 weiterhin horizontal verlaufende Schlitze 27 ausgebildet, die beim Rüh- bzw. Zerkleinerungsvorgang die Nahrungsmittel an dieser Stelle zum Zwecke der Zirkulation radial austreten lassen.

Nach den Fign. 4 und 5 schließt sich an den Rohrabschnitt eine Stufe 29 an, die, wenn der Pürierstab ordnungsgemäß in die in der Zeichnung nicht dargestellte Kupplungseinrichtung des Handrühres 1 eingesetzt ist, wie dies Fig. 5 deutlich zeigt, an der Unterseite 30 anschlägt und somit die Bewegung des Pürierstabes 11 zum Handrührer 1 hin begrenzt. Wie aus Fig. 5 weiterhin ersichtlich ist, bildet die Mantelfläche des Rohrabschnittes 23 den Anschlag für den Vorsprung 16 des Winkelstücks 18, so daß die Stirnfläche des Winkelstücks 18 das Betätigungselement 21 nach Fig. 5 in der Stellung hält, in der der Schalter 20 geöffnet ist.

In Fig. 7 ist das nach der Erfindung arbeitende elektrische Schaltbild schematisch dargestellt. Die mit den Positionsnummern 31 und 32 bezeichneten Punkte stellen die Anschlußpole eines elektrischen Steckers (nicht dargestellt) dar, der mit einer elektrischen Energiequelle verbindbar ist. Die vom Anschlußpol 31 ausgehende Leitung 33 führt zu dem 5-Stufenschalter 9, der einen in Richtung Y beweglichen Schiebekontakt aufweist, der mit den gegenüberliegenden fünf Kontakten 35 bis 39 verbindbar ist. In der in Fig. 7 dargestellten Stellung des Schiebekontakts 34 ist dieser mit dem Kontakt 36 verbunden, der, da er keine Verbindung über den Elektromotor 40 zum Anschlußpol 32 hat, die O-Stellung des Handrühres 1 darstellt. Der Kontakt 37 ist über die Leitung 41 mit dem Elektromotor 40 verbunden, der wiederum über die Leitung 42 mit dem Anschlußpol 32 in Verbindung steht. In der Leitung 41 ist ein elektrisches Bauelement 43 zwischengeschaltet. Von dem Kontakt 38 verläuft eine weitere Leitung 44, die hinter dem Bauelement 43 am Punkt 53 mit der Leitung 41 verbunden ist. In die Leitung 44 ist ein weiteres Bauelement 45 zwischengeschaltet. Von dem Kontakt 39 verläuft eine weitere Leitung 46 zu der Leitung 41 und mündet hinter den beiden Bauelementen 43, 45 am Punkt 52 in diese. Bei den Bauelementen 43, 45 handelt es sich um solche, die die Lehrlaufdrehzahl des Elektromotors 40 in unterschiedlicher Weise verringern. Dabei kann es sich im einfachsten Falle nur um Vorwiderstände mit verschiedenen Widerstandswerten handeln.

In Fig. 7 liegt hinter den Bauelementen 43, 45 und der Leitung 44 in der Leitung 41 der vom Winkelstück 18 (Fig. 4 und 5) in seine Offenstellung 50 (in Fig. 7 gestrichelt dargestellt) betätigbare Schalter 20. In der Leitung 41 zwischen dem Schalter 20 und dem Elektromotor 40 ist eine weitere Leitung 47 angeschlossen, die mit dem Kontakt 35 verbunden ist, welcher mit dem Schiebekontakt 34 die Schaltstufe für den Kurzzeitbetrieb darstellt.

Die Wirkungsweise des erfindungsgemäßen Handrührers ist folgende:
Soll beispielsweise mit dem Handrührer nach Fig. 1 geknetet werden, so wird der Knethaken 10 in die hierfür vorgesehene Öffnung, was beispielsweise auch die Öffnung 12 sein kann, eingesetzt und soweit verschoben, bis sein am Ende ausgebildeter, aber in der Zeichnung nicht dargestellter und als Kupplung wirkender Eingriff in die zugehörige Kupplungseinrichtung einrastet und drehfest mit der Antriebswelle der Getriebeanordnung verbunden ist. Ist beispielsweise der Knethaken 10 über die Öffnung 12 mit der Kupplungseinrichtung kuppelbar eingeschoben, so muß zwar die Klappe 14 geöffnet werden, allerdings aufgrund des wesentlich geringeren Durchmessers des vorzugsweise aus Edelstahl hergestellten Knethakens 10 schlägt die Klappe 14 mit ihrem Vorsprung 16 an der Oberfläche des Stahldrahtes in einer derartigen Stellung an, daß die am Winkelstück 18 ausgebildete Stirnfläche 19 nicht das Betätigungselement 21 des Schalters 20 berührt. Somit bleibt also bei der Benutzung eines oder zweier Knethaken oder zweier Schneebesen der Schalter 20 geschlossen, wie dies Fig. 7 zeigt. Aufgrund des geschlossenen Schalters 20 können nun alle fünf Schaltstufen eingeschaltet werden, so daß entsprechend der Vorwiderstände 43, 45 in den Stufen I und II die Drehzahl am Elektromotor 40 und somit an den Knethaken unterschiedlich groß ist. Bei Verwendung der Stufe III dreht der Elektromotor 40 und somit die Knethaken 10 am schnellsten, da kein Vorwiderstand in der Leitung 26 zwischen geschaltet ist.

Da der mit dem Betätigungsglied 8 (Fig. 1) verbundene Schiebekontakt 24 (Fig. 7) in den Stufen I, II und III jeweils fest einrastet, läuft der Motor in diesen drei Stellungen so lange, bis von Hand das Betätigungsglied 8 in eine andere Stellung, also auch in die O-Stellung verschoben wird. Wird das Betätigungsglied 8 in die Stufe IL verschoben, so muß das Betätigungsglied 8 entgegen der Kraft einer Feder (nicht dargestellt) in dieser Stellung von Hand gehalten werden. Sobald eine Hand vom Betätigungsglied 8 wegrückt, schiebt sich das Betätigungsglied selbsttätig infolge der Kraft der Feder in die O-Stellung zurück (Kurzzeitbetrieb).

Wird nun nach Öffnen der Klappe 14 der mit einem rotierenden Messer versehene Pürier- oder Mixstab in die Öffnung 10 eingesetzt, so muß die Klappe 14 nach den Fign. 4 und 5 soweit nach rechts geschoben werden - und dies bevor der am oberen Ende an der Abtriebswelle für das messerähnliche Arbeitswerkzeug ausgebildete Eingriff (nicht dargestellt) in die Kupplungseinrichtung der mit dem Elektromotor verbundenen Getriebeeinrichtung einrastet -, bis die Stirnfläche 19 des Winkelstücks 18 das Betätigungselement 21 zum Schalter 20 hin verschiebt und dieser seine Offenstellung (Fig. 7) einnimmt. Dadurch wird die Leitung 33 vom Anschlußpol 31 über den 5-Stufenschalter und die Leitung 41 bis zum Punkt 48 unterbrochen. In dieser Stellung können die für den Dauerbetrieb zuständigen Kontakte 37, 38 und 39 mit dem Schiebekontakt 34 verbunden werden, ein Strom fließt aber nicht bis zum Elektromotor 40, so daß bei Wahl einer der drei Dauerschaltstufen I bis III der Elektromotor 40 nicht in Betrieb gesetzt werden kann.

Verschiebt man allerdings nach Fig. 7 den Schiebeschalter 34 entgegen der Kraft einer Feder in die Schaltstellung IL so fließt Strom vom Aschlußpol 31 über die Leitung 33 zum Schiebekontakt 34, von dort zum Kontakt 35 und weiter über die Leitung 47 bis zum Anschlußpunkt 48, von wo er dann über das Endstück der Leitung 41 zum Elektromotor und von dort über die Leitung 42 zum Anschlußpol 32 fließt. Der Elektromotor 40 ist eingeschaltet und dreht sich mit seiner maximalen Nenndrehzahl, die dann direkt oder über ein zwischengeschaltetes Getriebe auf die Kupplungseinrichtung und von dort über die im Schaft 25 ausgebildete Abtriebswelle (nicht dargestellt) auf das in der Glocke 26 ausgebildete Arbeitswerkzeug (nicht dargestellt) übertragen wird.

Sobald sich der Finger einer Bedienungsperson vom Schiebekontakt 34 entfernt, verschiebt sich dieser selbsttätig in die O-Stellung zurück und das messerähnliche Arbeitswerkzeug gelangt sofort zum Stillstand. Über die erfindungsgemäße Sicherheitseinrichtung kann also bei Benutzung eines mit einem messerähnlich ausgebildeten Arbeitswerkzeug versehenen Pürier- oder Mixstabes nur die Kurzzeitschaltstufe IL eingeschaltet werden, so daß bei unvorhergesehenem Eingreifen der Hand in die Glocke 26 und gleichzeitigem Loslassen des Betätigungsgliedes 8 sich der Stufenschalter in seine O-Stellung selbsttätig zurückbewegt, wodurch der Elektromotor 40 und somit das messerähnliche Arbeitswerkzeug zum Stillstand kommt. Hierdurch können größere Verletzungen vermieden werden.

## Patentansprüche

1. Elektrisch betriebener Handrührer (1) zum Bearbeiten von Nahrungsmitteln, mit einer manuell zu betätigenden elektrischen Schalteinrichtung (9) zur Inbetriebnahme des Elektromotors (40), die sowohl eine oder mehrere Schaltstufen (I, II, III) für den Dauerbetrieb des Elektromotors (40) als auch mindestens eine Schaltstufe (IL) aufweist, bei deren Auswahl der Elektromotor (40) nur so lange in Betrieb (Kurzzeitbetrieb) bleibt, als diese manuell betätigt bleibt und mit mehreren zur Halterung und zum Antrieb verschiedener einsetzbarer Arbeitswerkzeuge dienenden Kupplungseinrichtungen, wobei es sich bei den Arbeitswerkzeugen, beispielsweise um Knethaken (10), Schneebesen oder einen ein rotierendes Messer aufweisenden Pürierstab (11), handeln kann, wobei der Handrührer (1) Mittel (14, 18, 19, 20, 21) aufweist, die dafür sorgen, daß nach dem Einsetzen eines Pürierstabes (11) oder anderer messerähnlicher Arbeitswerkzeuge In die hierfür vorgesehene Kupplungseinrichtung trotz der Aktivierung der Schaltstufen (I, II, III) für den Dauerbetrieb eine Verbindung des Elektromotors (40) mit seiner Spannungsversorgung verhindert wird, während bei manueller Betätigung der Schaltstufe (IL) für den Kurzzeitbetrieb der Elektromotor (40) nach wie vor mit seiner Spannungsversorgung verbunden ist, wobei die Mittel unter anderem aus einem bei nicht in die für den Pürierstab (11) oder anderer messerähnlich wirkender Arbeitswerkzeuge vorgesehene Kupplungseinrichtung eingesetztem Arbeitswerkzeug geschlossenen elektrischen Schalter (20) besteht, der im Stromkreis für den Dauerbetrieb des Elektromotors liegt und der beim Einsetzen des Pürierstabes (11) oder anderer messerähnlich wirkender Arbeitswerkzeuge in die hierfür vorgesehene Kupplungseinrichtung geöffnet wird, wobei ein Öffnen des Schalters (20) beim Einsetzen des Pürierstabes (11) oder anderer messerähnlich wirkender Arbeitswerkzeuge (11) vor dessen mechanischer Verbindung mit der zugehörigen Kupplungseinrichtung erfolgt und wobei diese Kupplungseinrichtung über eine am Motorgehäuse (2) ausgebildete Öffnung (12) von außen zugänglich ist, die von einer Klappe (14) verschließbar ist,
**dadurch gekennzeichnet**,
daß die Klappe (14) durch die Kraft einer Feder (24) verschließbar ist, daß die Klappe (14) entgegen der Federkraft derart verschoben werden muß, damit diese das Betätigungselement (21) des elektrischen Schalters (20) betätigt und daß nach Einführen des messerähnlichen Arbeitswerkzeuges (11) in die hierfür vorgesehene Kupplungseinrichtung ein am Arbeitswerkzeug (11) ausgebildeter Anschlag (23) die Klappe (14) entgegen der Kraft der Feder (24) in ihrer Offenstellung hält.

2. Handrührer nach Anspruch 1,
**dadurch gekennzeichnet**,
daß die Klappe (14) beim Einsetzen von dem Gehäuse (25) des Arbeitswerkzeuges (11) In seine Offenstellung gebracht wird.

3. Handrührer nach Anspruch 1,
**dadurch gekennzeichnet**,
daß die Klappe (14) selbst von der Hand einer Bedienungsperson geöffnet wird.

4. Handrührer nach Anspruch 1 oder 2,
**dadurch gekennzeichnet**,
daß die Klappe (14) von einem Schieber gebildet wird, der in einer im Gehäuse (2) ausgebildeten Kulissenführung (13) gegen die Kraft der Feder (24) quer zur Längsrichtung des messerähnlichen Arbeitswerkzeuges (11) verschiebbar ist.

5. Handrührer nach Anspruch 1,
**dadurch gekennzeichnet**,
daß der elektrische Schalter (20) durch magnetische Kräfte geöffnet wird, die von einem an dem entsprechenden Arbeitswerkzeug angebrachten Permanentmagneten erzeugt werden.

6. Handrührer nach Anspruch 1,
**dadurch gekennzeichnet**,
daß das messerähnliche Arbeitswerkzeug ein Pürierstab (11) ist, der aus einer in einem stabförmig ausgebildeten Gehäuse (25) drehbar gelagerten Abtriebswelle besteht, die an ihrem einen Ende einen Eingriff zum drehfesten Kuppeln mit der Kupplungseinrichtung und die an ihrem anderen Ende sich radial erstreckende Messerklingen aufweist, wobei die Messerklingen von einer am Gehäuse ausgebildeten, glockenförmig sich erweiternden und nach unten hin offenen Abschirmung (26) radial nach außen geschützt sind und daß der Anschlag (23) von einer den Eingriff der Abtriebswelle umgebenden, rohrförmigen Hülse gebildet wird.

## Claims

1. A power driven handheld blender (1) for processing foods, including a manually operated electrical switching device (9) to activate the electric motor (40) with one or more switch steps (I, II, III) for the continuous operation of the electric motor (40) as well as at least one switch step (IL) which, when selected, keeps the electric motor (40) in operation (pulse setting) only as long as it remains manually operated, further including a plurality of coupling devices which serve to retain and drive various insertable tools, these tools being, for example, dough hooks (10), whisks or a blending attachment with a rotating blade, the said handheld blender (1) being provided with means (14, 18, 19, 20, 21) which ensure that after the insertion of a blending attachment (11) or any other blade-like tool into the coupling device provided herefor, a connection of the electric motor (40) with its voltage supply is prevented despite the activation of the switch steps (I, II, III) for the continuous operation, while in the event of manual activation of the switch step (IL) for the pulse setting the electric motor (40) continues to be connected to its voltage supply, the said means, among others, being composed of an electric switch (20) which is closed when the tool is not inserted into the coupling device provided for the blending attachment (11) or any other blade-like tools, which switch is provided in the circuit for the continuous operation of the electric motor and which is opened when the blending attachment (11) or any other blade-like tool is inserted into the coupling device provided for this purpose, the opening of the switch (20) on insertion of the blending attachment (11) or any other blade-like tools (11) being effected prior to its mechanical connection to the associated coupling device, the said coupling device being accessible from the outside through an opening (12) provided in the motor housing (2) and closable by a flap (14),
**characterized** in that the flap (14) is closable by the force of a spring (24), in that the flap (14) must be displaced in opposition to the spring force such that it actuates the actuating element (21) of the electric switch (20), and in that after the insertion of the blade-like tool (11) into the coupling device provided herefor, a stop (23) formed on the tool (11) keeps the flap (14) in its open position in opposition to the force of the spring (24).

2. A handheld blender as claimed in claim 1,
**characterized** in that, on attachment, the flap (14) is caused by the housing (25) of the tool (11) to adopt its open position.

3. A handheld blender as claimed in claim 1,
**characterized** in that the flap (14) itself is opened by the hand of a user.

4. A handheld blender as claimed in claim 1 or claim 2,
**characterized** in that the flap (14) is formed by a slide which is slidable in a coulisse guideway (13) provided in the housing (2) in opposition to the force of the spring (24) transversely to the longitudinal direction of the blade-like tool (11).

5. A handheld blender as claimed in claim 1,
**characterized** in that the electric switch (20) is opened by magnetic forces which are generated by a permanent magnet fitted to the respective tool.

6. A handheld blender as claimed in claim 1,
**characterized** in that the blade-like tool is a blending attachment (11) which is composed of an output shaft rotatably mounted in a rod-shaped housing (25) and being provided, at its one end, with a gearing for the unrotatable coupling with the coupling device and, at its other end, with radially extending knife-blades, the said knife-blades being protected in radially outward direction by a shield (26) which is provided on the housing, expands like a bell and is open downwardly, and in that the stop (23) is formed by a tubular sleeve encompassing the gearing of the output shaft.

## Revendications

1. Batteur à main électrique (1) pour traiter des denrées alimentaires, comprenant un dispositif de commutation électrique (9), à commander manuellement, pour la mise en marche du moteur électrique (40), dispositif qui comporte à la fois une ou plusieurs positions de commutation (I, II, III) pour la marche continue du moteur (40) et au moins une position de commutation (IL) à la sélection de laquelle le moteur (40) reste seulement en fonctionnement (marche de courte durée) tant que cette position continue à être commandée manuellement, et comprenant plusieurs dispositifs d'accouplement pour la fixation et l'entraînement de différents outils de travail susceptibles d'être insérés, outils qui peuvent être constitués par exemple par des crochets malaxeurs (10), des fouets ou une tige de mixeur dite de transformation en purée (11), comportant un couteau tournant, le batteur (1) possédant des moyens (14, 18, 19, 20, 21) assurant que, après l'insertion d'une tige de transformation en purée (11) ou d'autres outils de travail semblables à des couteaux dans le dispositif d'accouplement prévu à cet effet, la connexion du moteur (40) à son alimentation électrique soit empêchée, malgré l'activation des positions de commutation (I, II, III) pour la marche continue, tandis que, dans le cas d'une commande manuelle de la position de commutation (IL) pour la marche de courte durée, le moteur (40) est connecté comme précédemment à son alimentation électrique, lesdits moyens étant formés notamment d'un interrupteur électrique (20) qui est fermé lorsqu'aucun outil de travail n'est inséré dans le dispositif d'accouplement prévu pour la tige de transformation en purée (11) ou pour d'autres outils de travail agissant à la façon d'un couteau, interrupteur qui est interposé dans le circuit électrique pour la marche continue du moteur et qui est ouvert à l'insertion de la tige de transformation en purée (11) ou d'autres outils de travail agissant à la façon d'un couteau dans le dispositif d'accouplement prévu à cet effet, l'ouverture de l'interrupteur (20) s'effectuant, lors de l'insertion de la tige de transformation en purée (11) ou d'autres outils de travail (11) agissant à la façon d'un couteau, avant qu'un tel outil ne soit relié mécaniquement au dispositif d'accouplement correspondant, lequel dispositif est accessible de l'extérieur à travers une ouverture (12) ménagée dans la carrosserie (2) du bloc moteur et pouvant être fermée par une trappe (14),
caractérisé en ce que la trappe (14) peut être fermée par la force d'un ressort (24), que la trappe (14) doit être déplacée à l'encontre de la force du ressort pour qu'elle actionne l'élément de commande (21) dudit interrupteur électrique (20) et que, après l'insertion de l'outil de travail (11) semblable à un couteau dans le dispositif d'accouplement prévu à cet effet, une butée (23) formée sur l'outil de travail (11), maintient la trappe (14) à sa position ouverte contre la force du ressort (24).

2. Batteur à main selon la revendication 1,
caractérisé en ce que la trappe (14) est amenée à sa position ouverte à l'insertion du corps (25) de l'outil de travail (11).

3. Batteur a main selon la revendication 1,
caractérisé en ce que la trappe (14) est elle-même ouverte par la main d'un opérateur.

4. Batteur à main selon la revendication 1 ou 2,
caractérisé en ce que la trappe (14) est formée par une pièce coulissante déplaçable en translation dans une glissière (13) formée dans la carrosserie (2), contre la force du ressort (24), transversalement à la direction longitudinale de l'outil de travail (11) semblable à un couteau.

5. Batteur à main selon la revendication 1,
caractérisé en ce que l'interrupteur électrique (20) est ouvert par des forces magnétiques générées par un aimant permanent placé sur l'outil de travail semblable à un couteau.

6. Batteur à main selon la revendication 1,
caractérisé en ce que l'outil de travail semblable à un couteau est une tige de mixeur dite de transformation en purée (11), qui comprend un arbre mené, monté rotatif dans un corps d'outil (25) en forme de tige, l'arbre présentant à une extrémité un élément d'attaque pour l'accouplement en rotation au dispositif d'accouplement et portant à son autre extrémité des lames de couteau orientées radialement et protégées radialement vers l'extérieur par un recouvrement (26) formé sur le corps, s'élargissant à la façon d'une cloche et ouvert en bas, et que la butée (23) est formée par une tubulure entourant l'élément d'attaque de l'arbre mené.
